# EUROPÄISCHE PATENTSCHRIFT

(11) **EP 0 535 351 B1**
(45) Veröffentlichungstag und Bekanntmachung des Hinweises auf die Patenterteilung: **05.06.1996**
(21) Anmeldenummer: 92114167.7
(22) Anmeldetag: 20.08.1992
(51) Int. Cl.: A61C 17/02

(54) **Zahnprothesen-Reinigungsgerät**
Cleaning device for dental prosthesis
Appareil de nettoyage pour le lavage des prothèses dentaires

(30) Priorität: 20.09.1991 DE 9111776 U; 10.12.1991 DE 4140575
(43) Veröffentlichungstag der Anmeldung: 07.04.1993
(73) Patentinhaber: Florjancic, Peter, D-82499 Wallgau (DE)
(72) Erfinder: Florjancic, Peter, D-82499 Wallgau (DE)
(74) Vertreter: Huss, Carl-Hans, Dipl.-Ing.

(56) Entgegenhaltungen:
- DE-A- 2 631 103
- US-A- 2 617 519
- US-A- 2 714 443
- US-A- 3 009 468
- US-A- 3 098 496

## Beschreibung

Die Erfindung betrifft ein Zahnprothesenreinigungsgerät gemäß dem Oberbegriff von Anspruch 1.

Ein derartiges Gerät ist aus der US-A-3 009 468 bekannt.

Zahnprothesen werden heutzutage in der Regel mit in Reinigungsflüssigkeiten oder in Wasser gelösten Reinigungstabletten/Reinigungspulvern oder auch Ultraschallgeräten gereinigt. Die im Handel befindlichen, für die Prothesenreinigung mit Reinigungsmitteln vorgesehenen Behälter bestehen aus drei Teilen, nämlich aus dem Behälter selbst, in den man z.B. eine Reinigungstablette einlegen kann, aus einer die Tablette abdeckenden Siebwand bzw. einem Einsatz mit Siebwand, auf die man die Prothesen horizontal aufeinander legt und aus dem lose aufsitzenden Deckel.

Aus der Durchschnittsgröße der horizontal liegenden Prothesen ergibt sich der Horizontalquerschnitt solcher Behälter, der meist kreisförmig ist.

Diese Art der Behälterausführung hat Nachteile, z.B. den, daß für die Prothese, die in diesem Fall auf der zuerst eingelegten liegt, von der aufsprudelnden Reinigungstablette nur noch wenig Reinigungskraft oder gar keine mehr übrig bleibt. Ein weiterer Nachteil ist, daß der Behälter, wenn er auf den Boden fällt, einschließlich der Doppelprothese in dann fünf Teile auseinanderspringt, die man dann häufig weit verstreut suchen muß, wobei die Prothese auch beschädigt werden kann. Der Vorteil dieser Art der Reinigung liegt daran, daß die Prothesen einer Langzeitreinigung, z.B. über Nacht, in der, gegebenenfalls mit einem Reinigungsmittel versehenen Flüssigkeit, unterworfen werden können, aber in manchen Fällen würde auch die Reinigung unter fließendem Wasser genügen, wenn mit der richtigen Stellung der Prothese im Strahl vorgenommen, was jedoch Geschick und Geduld erfordert.

Ultraschallreinigungsgeräte sind teuer und benötigen Strom.

Durch die US-A-3,009,468 ist ein Reinigungsgerät, insbesondere für Zahnprothesen, bekannt geworden, das aus zwei Teilen zusammengesetzt ist, die, durch ein Scharnier miteinander verbunden, in vertikaler Trennebene zu einem geschlossenen Gehäuse zusammengefügt werden können. In dem Innenraum jeden Gehäuseteils und im Abstand zu dessen Innenflächen ist eine rundum mit Strahlöffnungen versehene Korbschale angeordnet, die im geschlossenen Zustand des Geräts einen die Prothese oder Prothesen aufnehmenden Reinigungskorb bilden, der, außer am Boden, rundum von der Innenfläche des Gehäuses beabstandet ist. Eine Gehäusehälfte ist auf der Oberseite mit einem Wassereinfüllstutzen versehen und im geschlossenen Zustand weist das Gehäuse auf der der Einfüllöffnung gegenüberliegenden Seite eine Abflußöffnung auf. Wenn dieses Gerät mit seinem Einfüllstutzen an einen Wasserkran angeschlossen und das Wasser aufgedreht wird, strömt es in den Raum zwischen der Innenwand des Gehäuses und der Außenwand des Reinigungskorbes und gelangt mit Druck durch die Öffnungen im Korb gegen die Prothese(n), um danach durch die Ausflußöffnung abzufließen.

Abgesehen davon, daß dieses Gerät wegen der durch die vertikale Trennebene erforderlichen Dichtungen und weil im Gehäuse mit Abstand von diesem ein besonderer Reinigungskorb vorgesehen ist, sehr kompliziert aufgebaut und damit schwierig herzustellen ist, kann in ihm die bei hohem Verschmutzungsgrad meist erforderliche Langzeitreinigung nicht vorgenommen werden.

Damit liegt der Erfindung die Aufgabe zugrunde, ein Reinigungsgerät für Zahnprothesen zu schaffen, das einfach und billig, z.B. in einem Stück herstellbar ist, das sowohl die Langzeitreinigung im stehenden Wasser, z.B. über Nacht, als auch die Reinigung oder Nachreinigung unter fließendem Wasser ermöglicht, und das leicht zu verstauen ist.

Diese Aufgabe löst die Erfindung mit den im Hauptanspruch definierten Mitteln. Zweckmäßige Ausgestaltungen, Varianten und Weiterbildungen sind in den Unteransprüchen angegeben. Sie ist in den Zeichnungen an einem keinen Anspruch auf Vollständigkeit erhebenden Beispiel veranschaulicht.

Es stellen dar:

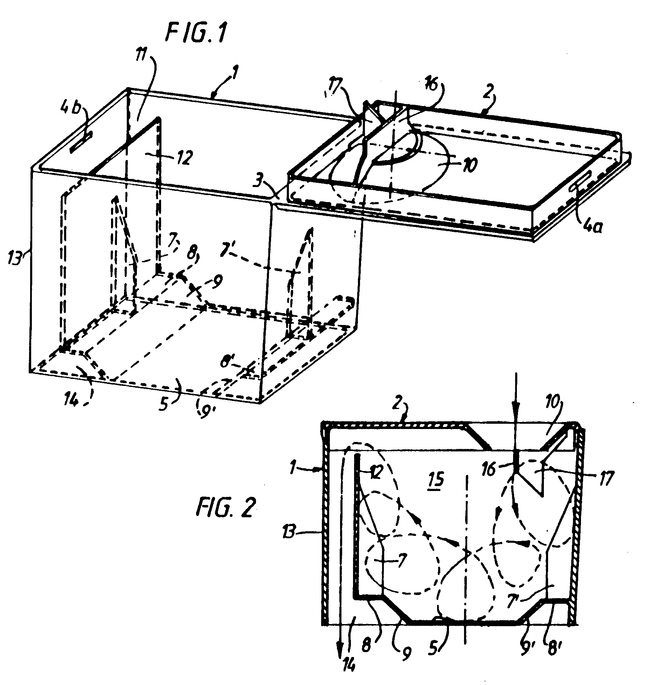

- Fig. 1: eine parallel-perspektivische Ansicht des Reinigungsgerätes nach der Erfindung in verkleinertem Maßstab, wobei die Prallwand 17a nicht dargestellt ist.
- Fig. 2: das Gerät nach Fig. 1 im Vertikalschnitt und im geschlossenem Zustand, ohne Darstellung der Prallwand 17a;
- Fig. 3: das Gerät in der Darstellung nach Fig. 2, jedoch mit aufgeklapptem Deckel;
- Fig. 4: das Gerät nach Fig. 3 in der Aufsicht;
- Fig. 5: ein erfindungsgemäßes Zahnprothesen-Reinigungsgerät in der Darstellung der Fig. 2 mit einer weiter verbesserten Wirbelerzeugung.

Hauptteile des Gerätes nach der Erfindung sind ein in waagerechter und horizontaler Ebene rechteckiger Behälter 1 und ein Deckel 2 sowie ein Scharnier 3, das z.B. als Filmscharnier ausgebildet, Gehäuse und Deckel bei aufgestellter Lage in waagerechter Trennebene miteinander verbindet. Ein Schnappriegel 4a, 4b hält den Deckel 2 fest auf dem Behälter 1 und sorgt dafür, daß ein herunter fallendes Gerät die Prothesen nicht freigibt.

Eine Abstufung im Boden kann als Tablettenaufnahme 5 dienen und dafür so geformt sein, daß die Tablette 6 schon beim Einwerfen auf den richtigen Platz fällt.

Durch zwei Trennrippen 7, 7' können die Prothesen P, P' getrennt gelagert sein und sich auf zwei seitlichen Stufen 8, 8' abstützen, so daß sie nebeneinander vertikal stehen. Auf diese Weise werden beide durch den im Behälter entstehenden wirbeligen Wasserstrahl erfaßt und somit gereinigt bzw. vor- und/oder nachgereinigt. Die als Tablettenaufnahme 5 dienende Bodenfläche und die Stufen 8, 8' sind durch Schrägflächen 9,9' miteinander verbunden.

Im Deckel 2 ist erfindungsgemäß außerhalb der Mitte auf der dem Scharnier 3 zugewandten Seite ein nach innen weisender Einfüllkonus 10 vorgesehen. Wenn der Behälter geschlossen ist, wird der Behälter von unten mit dem Konus 10 des Deckels 2 gegen einen Wasserhahn gedrückt und, falls man die Reinigung mit Hilfe eines Reinigungsmittels, z.B. einer Dosis Reinigungspulver oder einer Tablette vornehmen will, wird das benötigte Wasser in ihm eingefüllt. Überflüssiges Wasser kann durch einen Überlauf 11 abfließen. Dieser wird durch eine innere Trennwand 12 gebildet, die parallel in geringem Abstand zu der dem Einfüllkonus 10 abgewandten schmalen Seitenwand 13 des Behälters auf der Stufe 8 steht und um so viel kürzer als diese Seitenwand ist, daß das Wasser im Behälter über ihre Oberkante fließen und durch eine Öffnung 14 im Boden in z.B. ein Waschbecken abfließen kann.

In dem Deckel ist ferner nahe der Trennwand 12, aber nach innen in den Prothesenaufnahmeraum weisend, eine Prallwand 17a vorgesehen, die im geschlossenen Zustand des Gerätes ebenfalls parallel zur schmalen Seitenwand 13 steht.

Mit einem solchen Gerät kann man aber die Prothesen auch ohne besondere Reinigungsmittel reinigen, was seinen praktischen Wert erhöht.

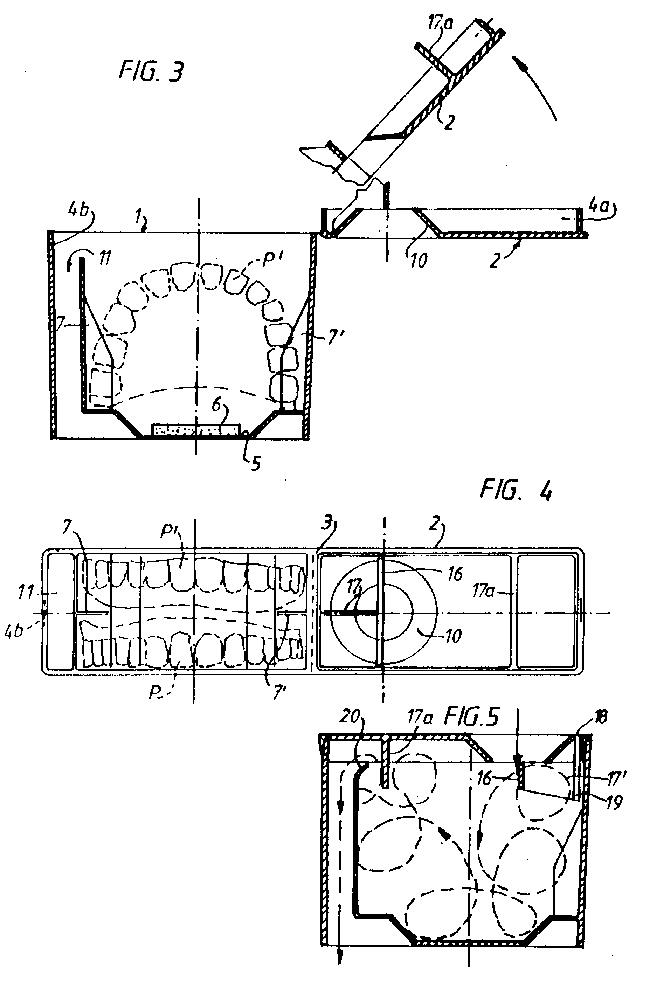

Das Prinzip der Wasserdurchlaufreinigung funktioniert wie folgt: Den geschlossenen Behälter drückt man mit der Hand von unten auf einen Wasserhahn und läßt warmes Wasser durchlaufen. Da der Ablauf auf der dem einfließenden Wasser abgewandten Seite liegt, wirken die Seitenwände, unterstützt durch die Prallwand 17 a als Prallwände, und es entsteht in seinem Aufnahmeraum 15 (Fig. 2) ein aus Wirbeln zusammengesetzter Durchlauf, der Speisereste löst und aus dem Behälter durch den Überlauf 11, 14 spült. Dies ist vor allem auch dann ein Vorteil, wenn man den Behälter mit auf Reisen nimmt. Die Prothesen können dann gereinigt werden, ohne daß dies von anderen Leuten wahrgenommen wird. Außerdem kann das erfindungsgemäße Gerät platzsparender als bekannte runde Reinigungsbehälter verstaut werden.

Die Turbulenz- und Wirbelwirkung im Behälter kann durch eine Aufspaltung des durch den Einfüllkonus 10 einströmenden Wasserstrahls erhöht werden. Hierzu können auf das Einlaufende des Einlaufkonus Strahlteilungsrippen gesetzt sein, z.B. eine die ganze Einlauföffnung überspannende Rippe 16 und eine quer liegende, nur die halbe Einlauföffnung überspannende Rippe 17.

Ferner kann in der Nähe oder dicht neben dem Einlaufkonus 10 ein Loch 18 in der Decke vorgesehen sein, das sich zweckmäßig in ein in das Innere des Behälters reichendes Röhrchen 19 fortsetzt. Durch das in Pfeilrichtung durch den Einlaufkonus einströmende Wasser wird durch das Loch 18 Außenluft angesaugt und durch das Röhrchen 19 in den Wasserstrahl eingemischt, wodurch die Reinigungswirkung desselben noch verstärkt wird.

Außer den bereits beschriebenen Prall- und Leitflächen, wie z.B. der Trennwand 12, den beiden Rippen 16 und 17, der Prallwand 17a können zur weiteren Wirbelverstärkung weitere derartige Flächen vorgesehen sein, z.B. die innere Trennwand 12 nach Fig. 5 in einer nach innen weisenden Abbiegung 20 enden.

Der durch den Überlauf 11 gebildete Kanal kann zusammen mit der Ausflußöffnung 14 auch zur Wandaufhängung an einem Winkelstück verwendet werden.

## Patentansprüche

1. Zahnprothesenreinigungsgerät, bestehend aus einem mindestens eine Prothese (Unterkiefer- und/oder Oberkieferprothese) aufnehmenden zweiteiligen Behälter (1), dessen beide Teile durch ein Scharnier (3) verbunden sind und das mit einer Einfüllöffnung (10) auf der Oberseite und mit einer Ausflußöffnung (14) im Behälterboden versehen ist, **dadurch gekennzeichnet,** daß das Gerät in waagerechter Teilung aus dem Behälter (1) und einem Deckel (2) mit einem rechteckigen Horizontal- und Vertikalquerschnitt besteht, die Einfüllöffnung (10) im Deckel (2) nahe einer schmalen Behälterwand liegt, der Behälterinnenraum durch eine parallel zur schmalen Seitenwand (13) sowie in dem der Einfüllöffnung (10) abgewandten Bereich des Behälterinnenraumes angeordnete, vom Boden aus nicht die gesamte Höhe des Behälterinnenraums einnehmenden Trennwand (12) in den eigentlichen Prothesenaufnahmeraum (15) und einen gegenüber diesen wesentlich schmäleren Überlauf (11) unterteilt ist, der im Behälterboden in die Ausflußöffnung (14) mündet, und daß auf der der Einfüllöffnung (10) abgewandten Seite eine nach innen in den Prothesenaufnahmeraum (15) weisende, parallel zu einer schmalen Behälterwand liegende Prallwand (17a) angeordnet ist.

2. Zahnprothesenreinigungsgerät nach dem Anspruch 1, dadurch **gekennzeichnet,** daß die Einfüllöffnung im Deckel (2) zur Anpassung an unterschiedliche Durchmesser der Enden von Wasserhähnen als Konus (10) ausgebildet ist.

3. Zahnprothesenreinigungsgerät nach den Ansprüchen 1 und 2, dadurch **gekennzeichnet,** daß die Behälterseite des Einfüllkonus (10) durch eine Strahlteilungsrippe (16) überspannt ist.

4. Zahnprothesenreinigungsgerät nach den Ansprüchen 1 bis 3, dadurch **gekennzeichnet,** daß senkrecht zu der Strahlteilungsrippe (16) eine weitere Rippe (17) steht.

5. Zahnprothesenreinigungsgerät nach dem Anspruch 1, dadurch **gekennzeichnet,** daß in der Nähe des Einfüllkonus (10) im Deckel (2) ein Loch (18) vorgesehen ist, das sich im Inneren des Behälters (1) in ein Röhrchen (19) fortsetzt.

## Claims

1. Dental prosthesis cleaning appliance, consisting of a two-part container (1) accommodating at least one prosthesis (lower jaw and/or upper jaw prosthesis) the two parts of which are connected by a hinge (3) and which is provided with a filler opening (10) on the upper side and an outflow opening (14) in the bottom of the container, **characterised in that** in horizontal division the appliance consists of the container (1) and a lid (2) of rectangular horizontal and vertical cross-section, the filler opening (10) is disposed in the lid (2) in the vicinity of a shorter wall of the container, the interior of the container is divided into the actual prosthesis accommodation space (15) and an overflow (11) which is appreciably narrower than the former by a partition (12) which extends parallel to the shorter side wall (13) in the region of the container remote from the filler opening (10) and which does not take up the entire height of the interior of the container, the overflow debouching into the outflow opening (14), and in that baffle wall (17a) projecting into the prosthesis accommodation space (15) and extending parallel with a shorter container wall is arranged on the side remote from the filler opening (10).

2. Dental prosthesis according to claim 1, **characterised in that** the filler opening in the lid (2) is formed as a cone (10) for matching the differing diameters of the ends of water taps.

3. Dental prosthesis according to claims 1 and 2 **characterised is that** the container side of the filler cone (10) is bridged over by a stream-dividing rib (16).

4. Dental prosthesis according to claims 1 to 3, **characterised in that** a further rib (17) stands perpendicularly to the stream-dividing rib (16).

5. Dental prosthesis according to claim 1, **characterised in that** a hole (18) continued as a small tube (19) in the interior of the container (1), is provided in the vicinity of the filler cone (10) in the lid (2).

## Revendications

1. Appareil de nettoyage de prothèses dentaires, comprenant une cuve en deux parties (1) recevant au moins une prothèse (prothèse de la mâchoire inférieure et/ou de la mâchoire supérieure) dont les deux parties sont reliées par une charnière (3) et munie d'un orifice de remplissage (10) à la partie supérieure et d'un orifice d'évacuation (14) au fond de la cuve, caractérisé en ce que l'appareil se compose selon une division horizontale de la cuve (1) et d'un couvercle (2) de section horizontale et verticale rectangulaire, en ce que l'orifice de remplissage (10) est situé dans le couvercle (2) au voisinage d'une paroi étroite de la cuve, en ce que l'intérieur de la cuve est divisé par une paroi de séparation (12) agencée parallèlement à la paroi latérale étroite (13) et dans la partie opposée de l'intérieur de la cuve, partant du fond et ne prenant pas toute la hauteur de l'intérieur de la cuve, en un espace (15) de réception de la prothèse proprement dit et en un déversoir de trop-plein (11) sensiblement plus étroit par rapport audit espace et débouchant au fond de la cuve dans l'orifice d'évacuation (14), et en ce qu'une chicane 17a dirigée vers l'intérieur de l'espace (15) de réception de la prothèse parallèlement à un petit côté de la cuve est agencée sur le côté opposé à l'ouverture de remplissage.

2. Appareil de nettoyage de prothèses dentaires selon la revendication 1, caractérisé en ce que l'orifice de remplissage dans le couvercle (2) est réalisé sous la forme d'un cône (10) de manière à s'adapter à des diamètres différents des extrémités de robinets d'eau.

3. Appareil de nettoyage de prothèses dentaires selon les revendications 1 et 2, caractérisé en ce que le côté cuve du cône de remplissage (10) est traversé par une nervure de séparation de jet (16).

4. Appareil de nettoyage de prothèses dentaires selon les revendications 1 à 3, caractérisé en ce qu'il y a une autre nervure (17) perpendiculaire à la nervure de séparation de jet (16).

5. Appareil de nettoyage de prothèses dentaires selon la revendication 1, caractérisé en ce qu'un trou (18) est prévu au voisinage du cône de remplissage (10) dans le couvercle (2) et se prolonge à l'intérieur de la cuve (1) par un petit tube (19).
